# EUROPÄISCHE PATENTSCHRIFT

(11) **EP 0 616 647 B1**
(45) Veröffentlichungstag und Bekanntmachung des Hinweises auf die Patenterteilung: **04.02.1998**
(21) Anmeldenummer: 93920794.0
(22) Anmeldetag: 22.09.1993
(51) Int. Cl.: C22C 38/44, B60B 17/00

(54) **HOCH BELASTBARE VOLLRÄDER UND RADREIFEN FÜR SCHIENEN-TRIEBFAHRZEUGE UND WAGEN**
HEAVY-DUTY SOLID WHEELS AND TYRES FOR RAIL LOCOMOTIVES AND TRUCKS
ROUES PLEINES ET BANDAGES DE ROUES A HAUTE CAPACITE DE CHARGE POUR VEHICULES A MOTEUR SUR RAILS ET WAGONS

(30) Priorität: 10.10.1992 DE 4234192
(43) Veröffentlichungstag der Anmeldung: 28.09.1994
(73) Patentinhaber: Gutehoffnungshütte Radsatz GmbH, 46145 Oberhausen (DE)
(72) Erfinder: CLAUSMEYER, Horst, D-46537 Dinslaken (DE); WEBER, Wolfgang, D-46147 Oberhausen (DE); HOFFMANN, Dieter, D-46499 Hamminkeln (DE)
(74) Vertreter: Dahlkamp, Heinrich-Leo
(86) Internationale Anmeldenummer: EP9302561
(87) Internationale Veröffentlichungsnummer: WO9409171

(56) Entgegenhaltungen:
- WO-A-87/01396
- DE-B- 1 051 886
- GB-A- 1 115 418
- US-A- 4 431 445

## Beschreibung

Die Erfindung betrifft hoch belastbare Vollräder und Radreifen für Schienen-Triebfahrzeuge und Wagen aus geschmiedetem, gewalztem, legiertem Stahl in vollvergütetem Zustand.

Vollräder und Radreifen für Schienenfahrzeuge werden bislang beispielsweise aus Stählen auf der Basis von Kohlenstoffgehalten von 0,48 % bis 0,52 % und Mangangehalten von 0,75 % bis 0,80 % gemäß Festlegungen des UIC-Kodex 812-3/V, 5. Ausgabe, 01.01.1984 hergestellt und verwendet.

Die Zugfestigkeit Rm für den hauptsächlich gebräuchlichen Stahl R7 liegt zwischen 820 - 940 N/mm², die Bruchdehnung A₅ bei mindestens 14 % und die Kerbschlagarbeit (KU) von ISO-U-Proben bei mindestens 15 Nm. Alle Werte sind bei 20 °C (Raumtemperatur) bestimmt.

Der Stahl R7 wird vorzugsweise für klotzgebremste Vollräder von Eisenbahnwagen mit hohen Achslasten eingesetzt.

Aus bekanntgewordenen Radbrüchen und den sich daran anschließenden Werkstoffuntersuchungen zur Ermittlung der Schadensursache bei diesen Stahlqualitäten wurde gefolgert, daß u.a. die ungenügenden Zähigkeitseigenschaften der nach UIC-Kodex spezifizierten Stähle als Bruchursache in Betracht zu ziehen sind.

Auch Schienenfahrzeuge für hohe Geschwindigkeiten werden mit Rädern aus dem Stahl R7 gemäß UIC-Kodex 812-3/V ausgerüstet. Höhere Beanspruchungen aus angehobenen Achslasten, größeren Geschwindigkeiten, erhöhten Bremsbelastungen, insbesondere bei Dauerbremsungen im Gebirge, können zu Radbrüchen führen.

Aufgabe der Erfindung war es deshalb, eine Stahlqualität für den Einsatz bei hochbelastbaren Vollrädern und Radreifen für Schienen-Triebfahrzeuge und Wagen zu entwickeln, die ein deutlich höheres Zähigkeitspotential bei gleichen Festigkeitseigenschaften als die eingeführten Stähle, z. B. der Stahl R7, aufweist und die vor allem die Bruchgefährdung der Räder auch nach Dauerbremsungen herabsetzt.

Die Lösung der Aufgabe erfolgt in der Weise, wie es in den Patentansprüchen angegeben ist.

Durch die Auswahl einer chemischen Zusammensetzung, die in den Massen-Anteilen der Grund- und Legierungselemente sowie in den Begleitelementen spezifisch aufeinander abgestimmt ist, wird ein Stahl hoher Reinheit und großer Gleichmäßigkeit erreicht.
Nach der erfindungsgemäßen Wärmebehandlung wird darüber hinaus ein Gefügezustand erreicht, der sich durch hervorragende Zähigkeitseigenschaften bei hoher Festigkeit, insbesondere aber auch durch hohe Dauerschwingfestigkeit, auszeichnet.

Die Erfindung betrifft somit die Spezifikation eines neuartigen Werkstoffs für Vollräder und Radreifen, die bei Schienenfahrzeugen zum Einsatz kommen sollen und die Wärmebehandlung der aus diesem Werkstoff hergestellten Vollräder und Radreifen.

Die Sachmerkmale der Ansprüche 1 und 2 sind somit gekennzeichnet durch eine Analyse, die in ihrer besonderen Abstimmung des Kohlenstoff-, Chrom- und Nickelgehaltes unter Begrenzung des Silizium-Gehaltes, Minimierung des Phosphor- und Schwefelgehaltes, nach dem Vergüten, bestehend aus Härten und Anlassen, ein Vollrad oder einen Radreifen in einen Werkstoffzustand versetzen, der die Festigkeitseigenschaften des heute überwiegend verwendeten Stahls R7 erreicht oder übertrifft, gegenüber dem Stahl R7 aber erheblich verbesserte Zähigkeitseigenschaften, insbesondere die der Bruchzähigkeit, aufweist.

Zum Erreichen hervorragender Zähigkeitseigenschaften werden in Anpassung an die gesamte Analyse Temperatur- und Abkühlungsbedingungen für das Härten und das Anlassen nach den Verfahrensmerkmalen von Anspruch 3 beansprucht, die dies sicherstellen und zugleich den entsprechend behandelten Vollrädern und Radreifen Mindest-Festigkeiten verleihen, wie sie z. B. der UIC-Kodex für Räder aus Stahl R7 fordert.

Die bislang eingeführten ferritisch-perlitischen Kohlenstoff-Mangan-Stähle gemäß UIC-Kodex lassen sich hinsichtlich ihrer Zähigkeitseigenschaften nicht nennenswert weiterentwickeln. Grundlegende Verbesserungen müssen deshalb bei der Stahlanalyse ansetzen, wobei selbstverständlich auf einen hohen Reinheitsgrad, auf Homogenität und auf möglichst isotrope Eigenschaften zu achten war. Angemessene Bruchzähigkeitseigenschaften erfordern daher unter Berücksichtigung der einzuhaltenden Mindestzugfestigkeiten in Abkehr von den ferritisch-perlitischen Stählen einen Stahl guter Durchvergütbarkeit mit einem feinkristallinen, homogenen Vergütungsgefüge. Gewisse Anteile an stabilen Kerbiden wirken sich positiv auf die Überhitzungsunempfindlichkeit aus. Die angestrebte hohe Dauer-Wälzfestigkeit und eine geringe Empfindlichkeit gegenüber Ermüdungsverschleiß sind durch eine Kombination von Gefügezustand, Festigkeit und Zähigkeit verwirklicht worden. Dies ist aus der erfindungsgemäßen chemischen Analyse und der darauf abgestimmten Wärmebehandlung herzuleiten.

Cr-Gehalte bis 1,50 Masse-%, Mo-Gehalte bis 0,60 Masse-% und Ni-Gehalte bis 1,20 Masse-% in der Stahllegierung können toleriert werden. Die in Patentanspruch 2 angegebenen Cr-, Mo- und Ni-Gehalte sind jedoch nach Möglichkeit anzustreben.

Die Methode des Härtens mit nachfolgendem Anlassen zum Zweck des Vergütens ist grundsätzlich bekannt. Sie dient vor allem der Verbesserung der Zähigkeitseigenschaften bei bestimmten angestrebten Festigkeitseigenschaften. Die spezielle Wärmebehandlung der Räder und Radreifen trägt zusätzlich der positiven Beeinflussung der Wälzfestigkeit, der Ermüdungsverschleißbeständigkeit und der Überhitzungsunempfindlichkeit des fertigen Rades und Radreifens Rechnung. Demgemäß ist auf ausreichend hohe Temperaturen im Temperaturbereich der homogenen γ-Mischkristall-Phase, auf eine schroffe Abschreckung von der Härtetemperatur, vorzugsweise im Wasser, und auf ein nachfolgendes Erwärmen auf relativ hohe Anlaßtemperaturen zu achten. Als Anhaltswerte für die Wärmebehandlung haben folgende Angaben zu gelten:
- Härten: 850 - 950 °C,: mit anschließendem Abschrecken in Wasser bzw. Öl bei Raumtemperatur (ca. 20 °C),
- Anlassen: 600 - 680 °C,: mit anschließendem langsamen Abkühlen in Luft bei Raumtemperatur (ca. 20 °C).

Die Festlegung der Wärmebehandlungs-Daten hat im Einzelfall auch den Bauteil-Abmessungen Rechnung zu tragen und kann daher im Einzelfall geringfügig abgeändert werden.

Die mechanisch-technologischen Eigenschaften des erfindungsgemäßen Werkstoffes sollten nach durchgeführter Wärmebehandlung bei Raumtemperatur folgende Werte erreichen:

| Streckgrenze (0,2 Dehngrenze) | |
|---|---|
| R_{Po.2} | mindestens 590 N/mm², |
| | |
| Zugfestigkeit Rₘ | mindestens 850 N/mm², |
| | |
| Bruchdehnung A₅ | mindestens 16 %, |
| | |
| Kerbschlagarbeit (ISO-V-Probe) Aᵥ | mindestens 34 Nm, |
| | |
| Bruchzähigkeit K_{Ic} | mindestens 100 MNm^{-3/2}. |

Die Kerbschlagarbeit in der Hochlage A_{VH} soll mindestens 65 Nm bei einer noch zu bestimmenden Temperatur erreichen.

## Patentansprüche

1. Hoch belastbare Vollräder und Radreifen für Schienen-Triebfahrzeuge und Wagen aus geschmiedetem, gewalztem, legiertem Stahl in vollvergütetem Zustand,
dadurch gekennzeichnet,
daß der Stahl der Vollräder und Radreifen nachfolgende chemische Zusammensetzung in Masse-% aufweist:
| | | |
|---|---|---|
| Kohlenstoff | (C) | 0,38 bis 0,42 |
| Silizium | (Si) | max. 0,25 |
| Mangan | (Mn) | 0,40 bis 0,60 |
| Phosphor | (P) | max. 0,012 |
| Schwefel | (S) | max. 0,005 |
| Chrom | (Cr) | 1,00 bis 1,50 |
| Molybdän | (Mo) | 0,30 bis 0,60 |
| Nickel | (Ni) | 0,70 bis 1,20 |
| Aluminium | (Al) | 0,015 bis 0,040 |
| Stickstoff | (N) | max. 0,008 . |

2. Vollräder und Radreifen nach Anspruch 1,
dadurch gekennzeichnet,
daß der Stahl der Vollräder und Radreifen einen Chrom-Gehalt (Cr) von 1,00 bis 1,30 Masse-%, einen Molybdän-Gehalt (Mo) von 0,30 bis 0,50 Masse-% und einen Nickel-Gehalt (Ni) von 0,70 bis 1,00 Masse-% aufweist.

3. Verfahren zur Wärmebehandlung von Vollrädern und Radreifen aus dem Stahl nach den Ansprüchen 1 und 2,
dadurch gekennzeichnet,
daß die Wärmebehandlung zur Vollvergütung folgende Behandlungsstufen durchläuft:
- Härten im Temperaturbereich von 850 bis 900 ° C mit anschließendem Abschrecken in Wasser bzw. Öl bei Raumtemperatur (ca. 20 ° C),
- Anlassen im Temperaturbereich von 600 bis 680 ° C mit anschließendem Abkühlen in Luft bei Raumtemperatur (ca. 20 ° C).

## Claims

1. Heavy-duty solid wheels and wheel tires for railway traction vehicles and cars made of forged, rolled, alloyed steel in fully tempered state, **characterised in that** the steel of solid wheels and wheel tires features the chemical composition expressed in % by mass as set forth hereunder:
| | | |
|---|---|---|
| Carbon | (C) | 0.38 to 0.42 |
| Silicone | (Si) | max. 0.25 |
| Manganese | (Mn) | 0.40 to 0.60 |
| Phosphorous | (P) | max. 0.012 |
| Sulphur | (S) | max. 0.005 |
| Chromium | (Cr) | 1.00 to 1.50 |
| Molybdenum | (Mo) | 0.30 to 0.60 |
| Nickel | (Ni) | 0.70 to 1.20 |
| Aluminium | (Al) | 0.015 to 0.040 |
| Nitrogen | (N) | max. 0.008 |

2. Solid wheels and wheel tires pursuant to Claim 1, **characterised in that** the steel for solid wheels and wheel tires features a chromium content (Cr) ranging from 1.00 to 1.30 % by mass, a molybdenum content (Mo) ranging from 0.30 to 0.50 % by mass and a nickel content (Ni) ranging from 0.70 to 1.00 % by mass.

3. A process for heat treatment of solid wheels and wheel tires made of steel pursuant to Claims 1 and 2, **characterised in that** the heat treatment for full tempering undergoes the following stages of treatment:
- hardening in a temperature range from 850 to 900 °C followed by quenching in water and/or oil at ambient temperature (approx. 20 °C)
- annealing in a temperature range from 600 to 680 °C followed by quenching in air at ambient temperature (approx. 20 °C)

## Revendications

1. Roues monobloc et bandages de roue à haute capacité de charge pour véhicules ferroviaires automoteurs et wagons en acier forgé, laminé, allié dans un état entièrement trempé et revenu
caractérisés en ce que
la composition chimique de l'acier des roues monobloc et des bandages de roue est la suivante en % de poids:
| | | |
|---|---|---|
| Carbone | (C) | 0,38 à 0,42 |
| Silicium | (Si) | maximum 0,25 |
| Manganèse | (Mn) | 0,40 à 0,60 |
| Phosphore | (P) | maximum 0,012 |
| Soufre | (S) | maximum 0,005 |
| Chrome | (Cr) | 1,00 à 1,50 |
| Molybdène | (Mo) | 0,30 à 0,60 |
| Nickel | (Ni) | 0,70 à 1,20 |
| Aluminium | (Al) | 0,015 à 0,040 |
| Azote | (N) | maximum 0,008 |

2. Roues monobloc et bandages de roue selon la revendication 1,
caractérisés en ce que
l'acier des roues monobloc et des bandages de roue ont une teneur en chrome (Cr) de 1,00 à 1,30 % en poids, une teneur en molybdène (Mo) de 0,30 à 0,50 % en poids et une teneur en nickel (Ni) de 0,70 à 1,00 % en poids.

3. Procédé pour le traitement thermique de roues monobloc et de bandages de roue en acier selon les revendications 1 et 2
caractérisé en ce que
le traitement thermique complet comprend les phases de traitement suivantes:
- durcissement dans la plage de température de 850 à 900 °C suivie d'une trempe à l'eau ou à l'huile à température ambiante ( env. 20 °C)
- revenu dans la plage de température de 600 à 680 °C suivi d'un refroidissement à l'air à température ambiante (env. 20 °C).
